# EUROPEAN PATENT APPLICATION

(11) **EP 4 679 231 A1**
(43) Date of publication of application: **14.01.2026**
(21) Application number: 24777629.7
(22) Date of filing: 01.03.2024
(51) Int. Cl.: G06F 3/01

(54) **METHOD AND APPARATUS FOR VEHICLE CONTROL BASED ON GESTURE RECOGNITION, AND VEHICLE**

(30) Priority: 28.03.2023 CN 202310359840
(71) Applicant: Shenzhen Yinwang Intelligent Technologies Co., Ltd., Shenzhen, Guangdong 518110 (CN)
(72) Inventor: WANG, Di, Shenzhen, Guangdong 518129 (CN); WANG, Junjie, Shenzhen, Guangdong 518129 (CN); XU, Xin, Shenzhen, Guangdong 518129 (CN); SONG, Xianxi, Shenzhen, Guangdong 518129 (CN); YANG, Jinghuan, Shenzhen, Guangdong 518129 (CN)
(74) Representative: Maiwald GmbH
(86) International application number: PCT/CN2024/079684
(87) International publication number: WO 2024/198839

(57) **Abstract**

Embodiments of this application provide a vehicle control method based on gesture recognition, an apparatus, and a vehicle. The method includes: obtaining an in-cockpit image of a vehicle and user in-position information, where the user in-position information indicates positions of M users in the vehicle that are presented in the in-cockpit image; constructing a user grid based on the in-cockpit image and the user in-position information, where the user grid includes depth data of the M users; for each of N target users performing a gesture operation, recognizing a gesture operation intention of the target user based on the user grid, where the M users include the N target users; and separately controlling the vehicle based on gesture operation intentions of the N target users, where both M and N are positive integers, and M is greater than or equal to N. The user grid is constructed based on the user in-position information, to provide refined data of the gesture operation for gesture recognition, thereby improving accuracy of gesture recognition.

## Description

This application claims priority to Chinese Patent Application No. 202310359840.6, filed with the China National Intellectual Property Administration on March 28, 2023 and entitled "VEHICLE CONTROL METHOD BASED ON GESTURE RECOGNITION, APPARATUS, AND VEHICLE", which is incorporated herein by reference in its entirety.

### TECHNICAL FIELD

This application relates to the field of intelligent vehicle technologies, and in particular, to a vehicle control method based on gesture recognition, an apparatus, and a vehicle.

### BACKGROUND

With the development of vehicle intelligence, a non-contact gesture control function is usually integrated into an intelligent vehicle. A driver may control a vehicle through a gesture operation based on the non-contact gesture control function without watching a screen, thereby improving driving safety. In addition, it may be inconvenient for the driver or a passenger to touch the screen, for example, when the driver or a front passenger lies down, or when a rear-row passenger needs to touch a front-row screen. In this case, based on the non-contact gesture control function, the vehicle is controlled through the gesture operation, thereby improving use convenience of the vehicle. However, how to implement accurate gesture recognition is an urgent problem to be resolved currently.

### SUMMARY

Embodiments of this application provide a vehicle control method based on gesture recognition, an apparatus, and a vehicle, to accurately recognize a gesture operation.

According to a first aspect, an embodiment of this application provides a vehicle control method based on gesture recognition. The method includes: obtaining an in-cockpit image of a vehicle and user in-position information, where the user in-position information indicates positions of M users in the vehicle that are presented in the in-cockpit image; constructing a user grid based on the in-cockpit image and the user in-position information, where the user grid includes depth data of the M users; for each of N target users performing a gesture operation, recognizing a gesture operation intention of the target user based on the user grid, where the M users include the N target users; and separately controlling the vehicle based on gesture operation intentions of the N target users, where both M and N are positive integers, and M is greater than or equal to N.

According to the vehicle control method based on gesture recognition provided in the first aspect, first, it is considered that a gesture of a user is obtained based on the in-cockpit image, to avoid a problem that a recognizable range is limited when an arrayed photoelectric sensor collects the gesture operation, and the gesture operation of the user may be not limited to a human-machine interaction interface of a display, but may be any object in the vehicle. Second, the user grid is constructed based on the in-cockpit image and the user in-position information, to provide fine gesture operation data for gesture recognition, thereby improving accuracy of gesture recognition. Further, based on an expansion of the recognizable range of the gesture operation, data collection and gesture recognition may be performed on gesture operations of a plurality of users. This improves user experience compared with a solution in which gesture recognition of a single person is supported.

In a possible implementation, the constructing a user grid based on the in-cockpit image and the user in-position information includes: recognizing the in-cockpit image to obtain feature data of body parts of the M users, where the feature data includes region data and key point data, the region data represents a region of the body parts in the in-cockpit image, and the key point data represents poses of the body parts; and constructing the user grid based on the feature data and the user in-position information.

According to the vehicle control method based on gesture recognition provided in this implementation, the in-cockpit image is recognized to obtain the feature data, to represent the region of the body part of the user in the in-cockpit image and the pose of the body part of the user through the feature data. In this way, the control apparatus can construct an accurate user grid based on the feature data and the user in-position information, thereby improving accuracy of gesture recognition.

In a possible implementation, the constructing a user grid based on the in-cockpit image and the user in-position information includes: constructing the user grid based on the in-cockpit image, the user in-position information, and a cockpit physical parameter, where the cockpit physical parameter indicates a position of an in-cockpit object of the vehicle in a cockpit coordinate system.

According to the vehicle control method based on gesture recognition provided in this implementation, the cockpit physical parameter is introduced, to accurately represent depth information of the user with reference to the position of the in-cockpit object of the vehicle in the cockpit coordinate system. This helps construct an accurate user grid, thereby improving accuracy of gesture recognition.

In a possible implementation, the separately controlling the vehicle based on gesture operation intentions of the N target users includes: for each of the N target users, determining, based on the user grid, whether the target user has control permission corresponding to the gesture operation intention; and when the target user has the control permission corresponding to the gesture operation intention, controlling the vehicle based on the gesture operation intention of the target user.

According to the vehicle control method based on gesture recognition provided in this implementation, it is determined that the target user has the control permission corresponding to the gesture operation intention, to implement control corresponding to the gesture operation intention. This ensures use safety of the vehicle. In addition, this avoids that gestures executed by some users without knowing a gesture operation rule are mistakenly recognized as gesture operations for vehicle control.

In a possible implementation, the determining, based on the user grid, whether the target user has control permission corresponding to the gesture operation intention includes: determining a position of the target user in the cockpit coordinate system based on the user grid; and determining, based on the position of the target user in the cockpit coordinate system, whether the target user has the control permission corresponding to the gesture operation intention.

According to the vehicle control method based on gesture recognition provided in this implementation, users at different seating positions have different control permissions. For example, a non-driver cannot perform a control operation that can be performed only by a driver, to ensure use safety of the vehicle.

In a possible implementation, the determining, based on the user grid, whether the target user has control permission corresponding to the gesture operation intention includes: determining, based on facial data of the target user in the user grid, whether the target user has the control permission corresponding to the gesture operation intention.

According to the vehicle control method based on gesture recognition provided in this implementation, control permissions can be bound to individual users. This ensures that an unauthorized user cannot control the vehicle, thereby improving use safety of the vehicle for the user.

In a possible implementation, the separately controlling the vehicle based on gesture operation intentions of the N target users includes: for each of the N target users, determining, based on key point data of the target user in the user grid, a first operation region in which a gesture key point of the target user is located; determining, based on the first operation region, a first operation object corresponding to a first gesture operation intention; and controlling the first operation object in the vehicle based on the first gesture operation intention of the target user.

According to the vehicle control method based on gesture recognition provided in this implementation, the gesture operation of the user may not be limited to a fixed region. For example, the control apparatus can still recognize the gesture operation of the user when a hand of the user is away from a screen, and an operation object is determined based on a position of the hand of the user. This expands a gesture recognition range and improves flexibility of the gesture operation.

In a possible implementation, the determining, based on key point data of the target user in the user grid, a first operation region in which a gesture key point of the target user is located includes: determining, based on the key point data of the target user and the cockpit physical parameter in the user grid, the first operation region in which the gesture key point of the target user is located.

According to the vehicle control method based on gesture recognition provided in this implementation, the first operation region in which the gesture key point of the target user is located is accurately recognized based on the cockpit physical parameter, to implement accurate recognition of the operation object, thereby improving accuracy of gesture operation recognition and control.

In a possible implementation, the method further includes: determining, based on the key point data of the target user in the user grid, that the gesture key point of the target user is switched from the first operation region to a second operation region; determining, based on the second operation region, a second operation object corresponding to a second gesture operation intention; and controlling the second operation object in the vehicle based on the second gesture operation intention of the target user.

According to the vehicle control method based on gesture recognition provided in this implementation, in a process in which the target user performs the gesture operation, the control apparatus quickly switches the operation object based on a change of the hand position. This improves efficiency of gesture recognition and flexible control of the gesture operation.

**In** a possible implementation, the method further includes: collecting the user in-position information by using a gravity sensor and/or a radar sensor.

According to the vehicle control method based on gesture recognition provided in this implementation, accurate user in-position information can be obtained, to construct an accurate user grid, thereby improving accuracy of gesture recognition.

In a possible implementation, the method further includes: collecting the cockpit physical parameter by using a radar sensor.

According to the vehicle control method based on gesture recognition provided in this implementation, an accurate cockpit physical parameter is collected by using the radar sensor, and the depth data of the user in the user grid is corrected to obtain an accurate user grid, thereby improving accuracy of gesture recognition.

According to a second aspect, an embodiment of this application provides a control apparatus, including: an obtaining module, configured to obtain an in-cockpit image of a vehicle and user in-position information, where the user in-position information indicates positions of M users in the vehicle that are presented in the in-cockpit image; a processing module, configured to construct a user grid based on the in-cockpit image and the user in-position information, where the user grid includes depth data of the M users; the processing module is further configured to, for each of N target users performing a gesture operation, recognize a gesture operation intention of the target user based on the user grid, where the M users include the N target users; and a control module, configured to separately control the vehicle based on gesture operation intentions of the N target users, where both M and N are positive integers, and M is greater than or equal to N.

In a possible implementation, the processing module is specifically configured to: recognize the in-cockpit image to obtain feature data of body parts of the M users, where the feature data includes region data and key point data, the region data represents a region of the body parts in the in-cockpit image, and the key point data represents poses of the body parts; and construct the user grid based on the feature data and the user in-position information.

In a possible implementation, the processing module is specifically configured to construct the user grid based on the in-cockpit image, the user in-position information, and a cockpit physical parameter, where the cockpit physical parameter indicates a position of an in-cockpit object of the vehicle in a cockpit coordinate system.

In a possible implementation, the control module is specifically configured to: for each of the N target users, determine, based on the user grid, whether the target user has control permission corresponding to the gesture operation intention; and when the target user has the control permission corresponding to the gesture operation intention, control the vehicle based on the gesture operation intention of the target user.

In a possible implementation, the control module is specifically configured to: determine a position of the target user in the cockpit coordinate system based on the user grid; and determine, based on the position of the target user in the cockpit coordinate system, whether the target user has the control permission corresponding to the gesture operation intention.

**In** a possible implementation, the control module is specifically configured to determine, based on facial data of the target user in the user grid, whether the target user has the control permission corresponding to the gesture operation intention.

**In** a possible implementation, the control module is specifically configured to: for each of the N target users, determine, based on key point data of the target user in the user grid, a first operation region in which a gesture key point of the target user is located; determine, based on the first operation region, a first operation object corresponding to a first gesture operation intention; and control the first operation object in the vehicle based on the first gesture operation intention of the target user.

**In** a possible implementation, the control module is specifically configured to determine, based on the key point data of the target user and the cockpit physical parameter in the user grid, the first operation region in which the gesture key point of the target user is located.

**In** a possible implementation, the processing module is further configured to: determine, based on the key point data of the target user in the user grid, that the gesture key point of the target user is switched from the first operation region to a second operation region; determine, based on the second operation region, a second operation object corresponding to a second gesture operation intention; and control the second operation object in the vehicle based on the second gesture operation intention of the target user.

In a possible implementation, the obtaining module is further configured to collect the user in-position information by using a gravity sensor and/or a radar sensor.

In a possible implementation, the obtaining module is further configured to collect the cockpit physical parameter by using a radar sensor.

For beneficial effects of the control apparatus provided in the second aspect and the possible implementations of the second aspect, refer to the beneficial effects achieved by the first aspect and the possible implementations of the first aspect. Details are not described herein again.

According to a third aspect, an embodiment of this application provides an electronic device, including a processor and a memory, where the memory is configured to store a computer program, and the processor is configured to invoke and run the computer program stored in the memory, to perform the method according to the first aspect or the possible implementations.

According to a fourth aspect, an embodiment of this application provides a chip, including a processor configured to invoke and run computer instructions from a memory, to enable a device in which the chip is installed to perform the method according to the first aspect or the possible implementations.

According to a fifth aspect, an embodiment of this application provides a computer-readable storage medium configured to store computer program instructions, where the computer program enables a computer to perform the method according to the first aspect or the possible implementations.

According to a sixth aspect, an embodiment of this application provides a computer program product, including computer program instructions, where the computer program instructions enable a computer to perform the method according to the first aspect or the possible implementations.

According to a seventh aspect, an embodiment of this application provides a vehicle, including the control apparatus provided in the second aspect or the possible implementations.

### BRIEF DESCRIPTION OF DRAWINGS

FIG. 1 is a diagram of an application scenario according to an embodiment of this application;
FIG. 2 is a diagram of a vehicle control system according to an embodiment of this application;
FIG. 3 is a schematic flowchart of a vehicle control method according to an embodiment of this application;
FIG. 4 is a schematic flowchart of a vehicle control method according to an embodiment of this application;
FIG. 5 is a block diagram of a control apparatus of a vehicle according to an embodiment of this application; and
FIG. 6 is a diagram of a structure of an electronic device according to an embodiment of this application.

### DESCRIPTION OF EMBODIMENTS

The following describes technical solutions in embodiments of this application with reference to accompanying drawings in embodiments of this application.

The technical solutions in embodiments of this application may be executed by a mobile device or an apparatus deployed in a mobile device. The mobile device may have any appearance, for example, an intelligent vehicle, an intelligent robot, or the like. The intelligent vehicle may be an automatic driving vehicle that realizes all of its functions as automatic control, or an assisted driving vehicle that realizes a part of its functions as automatic control to provide driving assistance, or may be a common vehicle on which an intelligent terminal is deployed. In the following, the automatic driving vehicle or the assisted driving vehicle is referred to as a vehicle for short.

In addition, the technical solutions in embodiments of this application may be executed by any terminal device, for example, a mobile phone (Mobile Phone), a tablet computer (Pad), a desktop computer, a terminal device in industrial control (industrial control), or the like. Alternatively, the terminal device may be a wearable device, and the wearable device may also be referred to as a wearable intelligent device, which is a general term for wearable devices that are intelligently designed and developed by using a wearable technology, for example, glasses, gloves, watches, clothes, shoes, and the like. The wearable device is a portable device that can be directly worn on a body or integrated into clothes or an accessory of a user.

The method provided in embodiments of this application may be applicable to any scenario in which gesture recognition needs to be performed, and in particular, to a scenario in which non-contact gesture (or referred to as a mid-air gesture) recognition is performed.

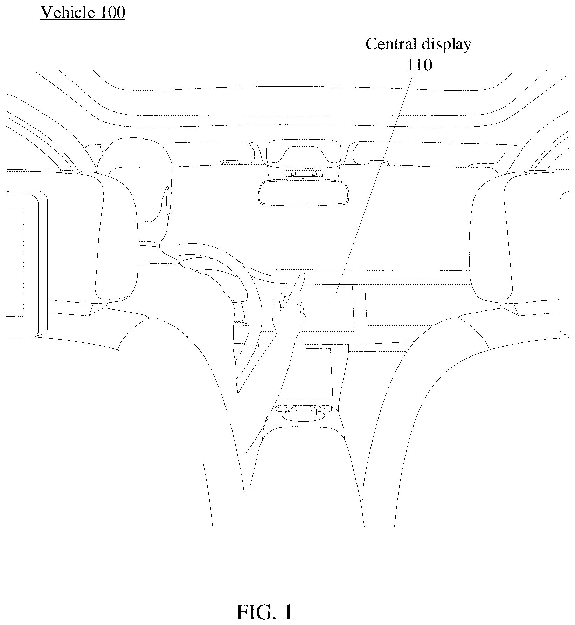

FIG. 1 is a diagram of an application scenario according to an embodiment of this application. As shown in FIG. 1, a central display 110 is deployed in a vehicle 100. The central display 110 is generally deployed at a front side of a vehicle cockpit, and between a driver seat and a front passenger seat. The central display 110 may recognize an operation intention of a user (including a driver and/or a passenger) based on a gesture operation of the user, to control the vehicle based on the operation intention of the user.

The central display 110 may sense a gesture of the user by using an arrayed photoelectric sensor, such as a linear array time of flight (time of flight, TOF) sensor. When a hand of the user approaches the central display to perform a gesture operation, an illumination unit continuously sends light pulses. The linear array TOF sensor receives light reflected back from the hand of the user, and determines depth (distance) information of a target object by detecting TOF of the light pulses, to recognize the gesture operation of the user. However, it is difficult to recognize some long-distance gesture operations, for example, a gesture operation performed when a driver or a front passenger lies down, or a gesture operation performed when a rear-row passenger needs to touch a front-row screen. Accuracy of the recognition is low, and the gesture operation may not even be detected.

For the foregoing problem, in this embodiment of this application, a user grid is constructed by using collected in-cockpit image and user in-position information. The user in-position information indicates a position of the user taking the vehicle, to supplement depth data of the user. In this way, the user grid constructed based on the user in-position information provides a more accurate pose of a body part of the user, achieving accurate recognition of the gesture operation over a larger range.

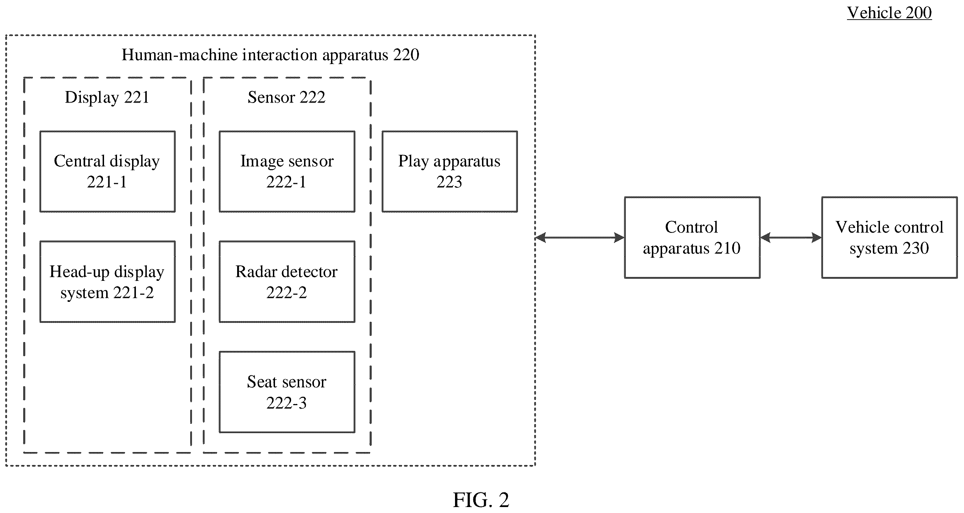

FIG. 2 is a diagram of a vehicle control system 200 according to an embodiment of this application. As shown in FIG. 2, a vehicle 200 includes but is not limited to a control apparatus 210 and a human-machine interaction apparatus 220. The control apparatus 210 may be connected to the human-machine interaction apparatus 220. The control apparatus 210 may be any hardware or software having a processing capability, for example, may be implemented as a vehicle control system and/or a cockpit control system. This is not limited in this application.

The human-machine interaction apparatus 220 may include a display 221 and a sensor 222. The display 221 may be deployed at any position in a vehicle cockpit, and a quantity of displays 221 deployed in the vehicle is not limited in this application. The display 221 may include a central display 221-1, a head-up display system 221-2, and the like. The head-up display system is also known as a head-up display (head-up display, HUD). The control apparatus 210 may display a human-machine interaction interface to a user through the display 221.

The sensor 222 may include but is not limited to some or all of an image sensor 222-1, a radar detector 222-2, and a seat sensor 222-3. The image sensor 222-1 may be an RGB camera, an infrared radiation (infrared radiation, IR) camera, a TOF camera, or the like. The image sensor 222-1 is configured to collect an image inside the vehicle cockpit. A quantity and deployment positions of image sensors 222-1 are not limited in this application. The radar detector 222-2 may include an ultrasonic radar detector, a millimeter-wave radar detector, and the like, and is configured to detect a user in the vehicle cockpit. The seat sensor 222-3 is configured to detect whether a seat of the vehicle carries a user. The seat sensor 222-3 may be a gravity sensor. The control apparatus 210 may obtain related information about a gesture operation of the user by using the sensor 222.

The human-machine interaction apparatus 220 may further include a play apparatus 223, for example, a sounder, a Bluetooth headset, or the like.

The vehicle 200 may further include a vehicle control system 230. The vehicle control system 230 may include but is not limited to a seat, lighting, a sounder, a vehicle door, a vehicle window, an air conditioning system, and the like.

The control apparatus 210 may perform gesture recognition on the gesture operation of the user based on data obtained by the sensor 222, to determine an operation intention of the user, and control the vehicle based on the operation intention of the user. For example, the control apparatus 210 may perform driving control and/or non-driving control on the vehicle based on the operation intention of the user. The driving control may include, for example, horning, turning on or off a vehicle light. The non-driving control may include, for example, control on the vehicle control system 120, for example, turning on or off an air conditioner, adjusting temperature of the air conditioner, controlling music playing, and opening or closing a vehicle window.

It should be understood that, for ease of understanding and description, the following describes the method provided in embodiments of this application by using a control apparatus in a vehicle as an execution body. The control apparatus may be, for example, the control apparatus 210 in FIG. 2. The control apparatus may be implemented as a component in the vehicle, for example, a chip, a chip system, or another functional module that can invoke and execute a program.

However, it should be understood that this should not constitute any limitation on the execution body of the method provided in this application. Provided that a program that records code of the method provided in embodiments of this application can be run according to the method provided in embodiments of this application, any device may serve as the execution body of the method provided in embodiments of this application.

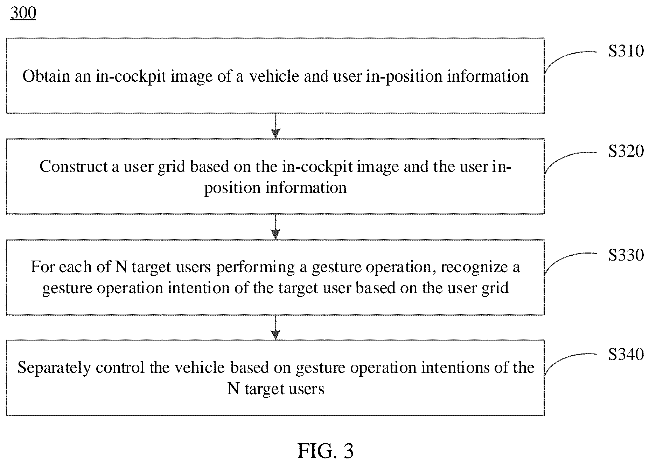

FIG. 3 is a schematic flowchart of a vehicle control method 300 according to an embodiment of this application. As shown in FIG. 3, the method 300 may include some or all of the following steps.

S310: Obtain an in-cockpit image of a vehicle and user in-position information.

S320: Construct a user grid based on the in-cockpit image and the user in-position information, where the user grid includes depth data of M users.

S330: For each of N target users performing a gesture operation, recognize a gesture operation intention of the target user based on the user grid, where the M users include the N target users.

S340: Separately control the vehicle based on gesture operation intentions of the N target users.

Both M and N are positive integers, and M is greater than or equal to N.

The in-cockpit image includes data of the M users. Types of data included in the collected in-cockpit image vary with different image sensors. When an image sensor for collecting the in-cockpit image is an RGB camera, the in-cockpit image may include RGB data of the M users. When an image sensor for collecting the in-cockpit image is an IR camera, the in-cockpit image may include IR data of the M users. When an image sensor for collecting the in-cockpit image is a TOF camera, the in-cockpit image may include point cloud data of the M users. Certainly, the in-cockpit image may be comprehensive data obtained by a control apparatus by performing fusion on data collected by a plurality of image sensors.

The user in-position information may indicate positions of the M users in the vehicle. The user in-position information may indicate, for example, a seating position of each user in a vehicle cockpit, for example, a specific seat that the user takes. For example, the user in-position information may be collected by a gravity sensor and/or a radar sensor. A seat sensor may sense, by using a gravity sensor carried on each seat position, whether there is a user on the seat. The radar sensor may detect, by using a radar, the position of the user in the vehicle cockpit.

In S310, the control apparatus may obtain the in-cockpit image collected by the image sensor (for example, the image sensor 222-1 in FIG. 2). The in-cockpit image may include the user of the vehicle, such as a driver and/or a passenger. The image sensor may continuously collect the in-cockpit image of the vehicle, to obtain multi-frame image data. The control apparatus may obtain, from the image sensor, each frame of collected in-cockpit image.

In S320, the control apparatus may match the position that is of the user in the vehicle and that is indicated by the user in-position information, with the M users presented in the in-cockpit image, to determine depth data of each user in the vehicle cockpit, thereby constructing the user grid. The user grid may include three-dimensional (3D) or pseudo-three-dimensional (for example, 2.5D) data of the M users.

For example, the control apparatus may recognize the in-cockpit image to obtain feature data of a body part of each of the M users. The feature data includes region data and key point data. The region data represents a region (or a position) of the body part of the user in the in-cockpit image, and the key point data represents a pose of the body part. The key point may be a point at a position, such as a contour or a joint of the body part. Further, the control apparatus constructs the user grid based on the feature data and the user in-position information.

For example, the control apparatus may construct the user grid based on the in-cockpit image, the user in-position information, and a cockpit physical parameter. The cockpit physical parameter indicates a position of an in-cockpit object of the vehicle in a cockpit coordinate system, for example, a coordinate position of a seat, a center console, a vehicle door, a vehicle window, a vehicle roof, or the like in the vehicle. A relative position relationship between each user and the in-cockpit object may be determined from matching between the in-cockpit image and the user in-position information, and an absolute position of the user in the cockpit coordinate system may be determined based on coordinates of each in-cockpit object that are provided based on the cockpit physical parameter.

The cockpit physical parameter may be preset, or the cockpit physical parameter may be collected by using the radar sensor. This is not limited in this application.

The control apparatus may recognize, based on the constructed user grid, the N target users performing the gesture operation. In addition, the control apparatus may recognize the gesture operation intention of the target user based on the user grid, to control the vehicle based on the gesture operation intention. It should be understood that, when a plurality of target users perform gesture operations, the control apparatus may separately recognize a gesture operation intention of each target user, and separately control the vehicle based on each gesture operation intention. When the plurality of target users perform the gesture operations, the control apparatus may control the vehicle in a parallel and/or serial manner. For example, for different gesture operation intentions of different operation objects, the control apparatus may control the vehicle in a parallel manner. For example, when a gesture operation intention of a target user A is to increase temperature of an air conditioner, and a gesture operation intention of a target user B is to open a vehicle window, the control apparatus may control the vehicle to increase the temperature of the air conditioner and open the vehicle window at the same time. For gesture operation intentions of a same operation object, the control apparatus may control the vehicle in a serial manner. For example, when a gesture operation intention of a target user A is to increase sounder volume, and a gesture operation intention of a target user B is to decrease the sounder volume, the control apparatus may control the vehicle to increase the sounder volume and then decrease the sounder volume. Certainly, an execution manner in which the control apparatus controls the vehicle is not limited in this application. For example, the control apparatus may control the vehicle in a serial manner to increase the temperature of the air conditioner and open the vehicle window.

In some embodiments, in a process of recognizing the gesture operation, the control apparatus may determine an operation object of the gesture operation of the target user. In an example, the control apparatus may determine the operation object based on an orientation of the gesture operation of the target user. For example, when the target user performs a downward wave gesture towards a position of a specific vehicle window of the vehicle, the control apparatus may determine that the operation object is the vehicle window, and a recognized gesture operation intention is to open the vehicle window. In another example, the control apparatus may determine the operation object based on a hand position of the target user when the target user performs the gesture operation. For example, when the target user makes a fist at a position close to a display, the control apparatus may determine that the operation object is the display, and a recognized gesture operation intention is to pause a video being played on the display. Certainly, the foregoing two examples may be combined to determine the operation object of the gesture operation.

In the foregoing examples, both the orientation and the hand position of the user when the target user performs the gesture operation may be determined based on the key point data. For example, when the control apparatus determines the operation object based on the hand position of the target user when the target user performs the gesture operation, the control apparatus may determine, based on the key point data of the target user in the user grid, an operation region in which a gesture key point of the target user is located, and determine, based on the operation region, the operation object corresponding to the gesture operation intention. The gesture key point may include a point at a position, such as a hand contour or a joint of the target user.

The control apparatus may determine, based on the gesture key point data of the target user and the cockpit physical parameter in the user grid, the operation region in which the gesture key point of the target user is located. An absolute position of the gesture key point of the target user in the cockpit coordinate system may be determined based on the position that is of the in-cockpit object of the vehicle in the cockpit coordinate system and that is provided by the cockpit physical parameter, to accurately recognize the operation region.

In some embodiments, when the target user performs the gesture operation, the hand position may change in a large range. In this case, with the change of the hand position of the target user, the control apparatus may quickly switch the operation object. For example, the control apparatus determines, based on the key point data of the target user, a first operation region in which the gesture key point of the target user is located, and determines, based on the first operation region, a first operation object corresponding to a first gesture operation intention, to control the first operation object in the vehicle based on the first gesture operation intention of the target user. Further, when the hand position of the target user moves from the first operation region to a second operation region, the control apparatus may determine, based on the key point data of the target user, that the gesture key point of the target user is switched from the first operation region to the second operation region, determine, based on the second operation region, a second operation object corresponding to a second gesture operation intention, and then control the second operation object in the vehicle based on the second gesture operation intention of the target user.

It should be noted that, when the hand position of the target user moves from the first operation region to the second operation region, the target user may not perform the gesture operation in the first operation region or may not perform the gesture operation completely. In this case, the control apparatus does not need to determine the first gesture operation intention, and does not need to control the first operation object. When the hand position of the target user moves from the first operation region to the second operation region, the target user performs the gesture operation in the first operation region. However, because the first operation region is switched to the second operation region quickly, the control apparatus may not be able to control the first operation object in time, and even fails to recognize the first gesture operation intention. In this embodiment, the control apparatus may implement that the operation object changes with the hand position, thereby improving efficiency of gesture recognition and flexible control of the gesture operation.

In this embodiment of this application, first, it is considered that a gesture of a user is obtained based on the in-cockpit image, to avoid a problem that a recognizable range is limited when an arrayed photoelectric sensor collects the gesture operation, and the gesture operation of the user may be not limited to a human-machine interaction interface of a display, but may be any object in the vehicle. Second, the user grid is constructed based on the in-cockpit image and the user in-position information, to provide fine gesture operation data for gesture recognition, thereby improving accuracy of gesture recognition. Further, based on an expansion of the recognizable range of the gesture operation, data collection and gesture recognition may be performed on gesture operations of a plurality of users. This improves user experience compared with a solution in which gesture recognition of a single person is supported.

Before controlling the vehicle based on the gesture operation intention of the target user, the control apparatus may first determine whether the target user has control permission corresponding to the gesture operation intention. When determining that the target user has the control permission corresponding to the gesture operation intention, the control apparatus controls the vehicle based on the gesture operation intention.

In an implementation, the control apparatus may determine a position of the target user in the cockpit coordinate system based on a user network, and determine, based on the position of the target user in the cockpit coordinate system, whether the target user has the control permission corresponding to the gesture operation intention. It may be understood that, in some scenarios, users seated in different positions of the vehicle may have different operation permissions. For example, a gesture operation of performing driving control on the vehicle may be performed only by a driver, and another user (for example, a front passenger or another passenger) does not have the gesture operation permission of performing driving control on the vehicle. In other words, when the gesture operation intention is to perform driving control on the vehicle, the control apparatus needs to determine whether the target user is a user on a driver seat. When it is determined that the target user is the user on the driver seat, the control apparatus performs driving control on the vehicle based on the gesture operation intention.

In another implementation, the control apparatus may determine, based on facial data of the target user in the user grid, whether the target user has the control permission corresponding to the gesture operation intention. It may be understood that a user (including a driver and a passenger) of a vehicle may pre-register facial data to obtain some or all control permissions of the vehicle based on gesture recognition. It should be understood that, among users who have registered facial data, different users may correspond to different control permissions, and the users may have different gesture operation permissions under different control permissions. For example, a user A (a driver) may perform all gesture operations of performing driving control and non-driving control on the vehicle; a user B (a common passenger) may perform all gesture operations of performing non-driving control on the vehicle; and a user C (a child) may perform some gesture operations of performing non-driving control on the vehicle. A user who does not register facial data may correspond to control permission of a visitor. Under the control permission of the visitor, the user may have control permission of some gesture operations or do not have control permission of any gesture operation. The control apparatus determines, by comparing the facial data of the target user in the user grid with the pre-registered facial data, whether the target user has the control permission corresponding to the gesture operation intention, and controls the vehicle based on the gesture operation intention when the target user has the control permission corresponding to the gesture operation intention.

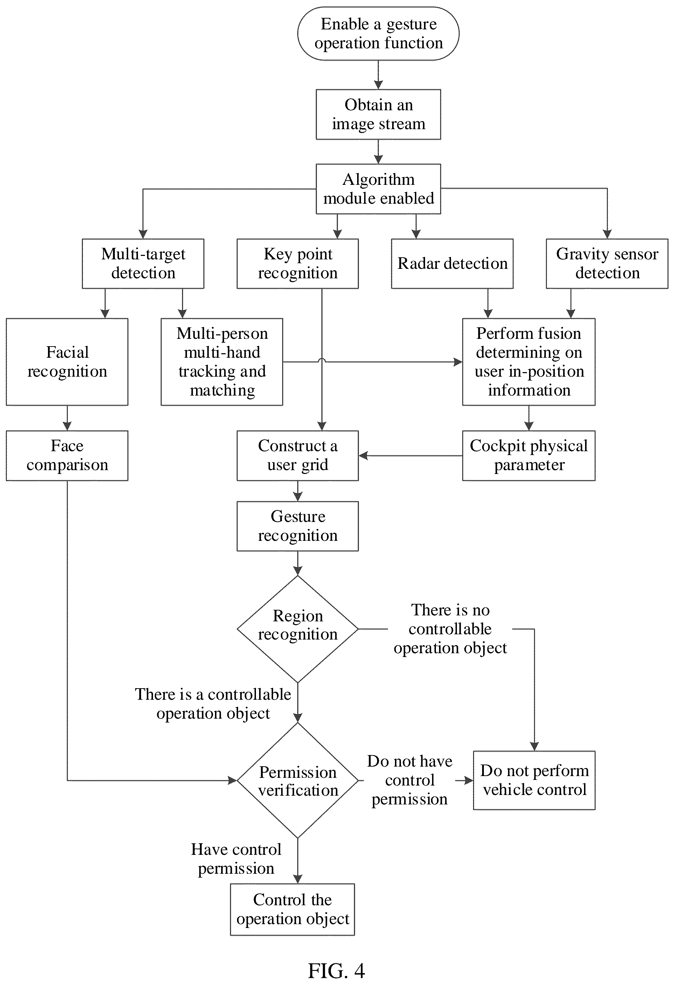

FIG. 4 is a schematic flowchart of a vehicle control method according to an embodiment of this application. As shown in FIG. 4, the method may include some or all of the following steps.

A control apparatus enables a gesture operation function, where the gesture operation function may be enabled by default, or may be enabled in response to an operation instruction of a user. After the control apparatus enables the gesture operation function, an algorithm module related to a gesture operation is enabled, and an image stream (including the foregoing in-cockpit image) is obtained by using an image collection apparatus.

The control apparatus may perform multi-target detection and key point recognition based on the in-cockpit image. The multi-target detection detects M users in the in-cockpit image based on human body detection logic, and performs multi-person multi-hand tracking and matching, to determine respective body part contours (that is, region data) of the M users, such as hand contours; and recognizes key points of the M users in the in-cockpit image, to obtain refined data (that is, key point data) of body parts of the M users, such as poses of hands.

The control apparatus further detects the M users by using a radar sensor and a gravity sensor. Further, the control apparatus performs fusion determining on user in-position information based on a cockpit physical parameter, a result of the multi-person multi-hand tracking and matching, and detection results of the radar sensor and the gravity sensor, to obtain the user in-position information. Then, a user grid is constructed based on the user in-position information as well as the region data and key point data that are obtained based on the in-cockpit image.

The control apparatus may recognize gesture operations of N target users based on the user grid, to obtain gesture operation intentions. The control apparatus may further determine, based on the user grid, a region in which a hand position of each target user is located. Further, the control apparatus may perform recognition based on the region in which the hand position of the target user is located, and determine whether there is a controllable operation object in the region. When there is a controllable operation object in the region, the control apparatus controls the operation object in a vehicle based on the gesture operation intention of the target user. When there is no controllable operation object in the region, the control apparatus does not control a vehicle based on the gesture operation intention of the target user.

The control apparatus may further perform facial recognition on the M target users based on a result of the multi-target detection, and determine, through face comparison, control permission of each target user on the vehicle. When the target user has the control permission, the control apparatus controls the vehicle based on the gesture operation intention of the target user. When the target user does not have the control permission, the control apparatus does not control the vehicle based on the gesture operation of the target user.

An execution sequence of the foregoing control permission verification and operation object recognition is not limited in this application.

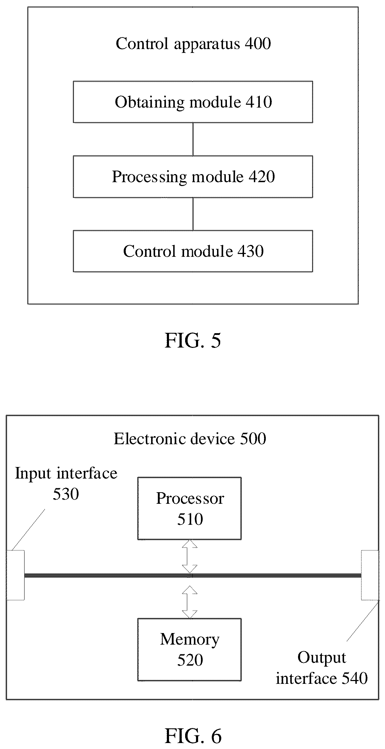

FIG. 5 is a block diagram of a control apparatus of a vehicle according to an embodiment of this application. As shown in FIG. 5, the control apparatus 400 of the vehicle includes an obtaining module 410, a processing module 420, and a control module 430.

The obtaining module 410 may be configured to obtain an in-cockpit image of the vehicle and user in-position information, where the user in-position information indicates positions of M users in the vehicle that are presented in the in-cockpit image. The processing module 420 is configured to construct a user grid based on the in-cockpit image and the user in-position information, where the user grid includes depth data of the M users. The processing module 420 is further configured to, for each of N target users performing a gesture operation, recognize a gesture operation intention of the target user based on the user grid, where the M users include the N target users. The control module 430 is further configured to separately control the vehicle based on gesture operation intentions of the N target users, where both M and N are positive integers, and M is greater than or equal to N.

It should be understood that a specific process in which the modules perform the foregoing corresponding steps has been described in detail in the foregoing method embodiments. For brevity, details are not described herein again.

Division of the modules in the apparatus 400 is merely division of logical functions. During actual implementation, all or some of the modules may be integrated into one physical entity, or may be physically separated.

FIG. 6 is a diagram of a structure of an electronic device 500 according to an embodiment of this application. The electronic device 500 may include a processor 510 and a memory 520. The processor 510 and the memory 520 communicate with each other through an internal connection path. The memory 520 is configured to store instructions. The processor 510 is configured to execute the instructions stored in the memory 520.

Optionally, the memory 520 may include a read-only memory and a random access memory, and provide instructions and data to the processor 510. The memory 520 may be a separate component, or may be integrated in the processor 510.

In some embodiments, the electronic device 500 may further include an input interface 530. The processor 510 may control the input interface 530 to communicate with another device or chip, and specifically, may obtain information or data sent by the another device or chip.

In some embodiments, the electronic device 500 may further include an output interface 540. The processor 510 may control the output interface 540 to communicate with another device or chip, and specifically, may output information or data to the another device or chip.

In some embodiments, the electronic device 500 may implement corresponding procedures in the methods in embodiments of this application. For brevity, details are not described herein again.

It should be understood that the processor in this embodiment of this application may be an integrated circuit chip, and has a signal processing capability. In an implementation process, the steps in the foregoing method embodiments can be implemented by using a hardware integrated logic circuit in the processor, or by using instructions in a form of software. The processor may be a general purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a discrete gate or a transistor logic device, or a discrete hardware component. The methods, the steps, and logical block diagrams that are disclosed in embodiments of this application may be implemented or performed. The general-purpose processor may be a microprocessor, or the processor may be any conventional processor or the like. The steps in the methods disclosed with reference to embodiments of this application may be directly executed and completed by a hardware decoding processor, or may be executed and completed by using a combination of hardware and software modules in the decoding processor. The software module may be located in a mature storage medium in the art, for example, a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor.

It may be understood that the memory in this embodiment of this application may be a volatile memory or a nonvolatile memory, or may include a volatile memory and a nonvolatile memory. The nonvolatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), and is used as an external cache. Through example but not limitative description, many forms of RAMs may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DR RAM). It should be noted that the memories of the systems and methods described in this specification include but are not limited to these and any memory of another proper type.

It should be understood that the foregoing memory is an example but not a limitative description. For example, the memory in this embodiment of this application may alternatively be a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), a direct rambus random access memory (Direct Rambus RAM, DR RAM), or the like. In other words, the memory described in this embodiment of this application is intended to include, but not limited to, these memories and any memory of another proper type.

An embodiment of this application further provides a computer-readable storage medium configured to store a computer program.

In some embodiments, the computer program enables the computer to perform corresponding procedures in the methods in embodiments of this application. For brevity, details are not described herein again.

An embodiment of this application further provides a computer program product, including computer program instructions.

In some embodiments, the computer program instructions enable the computer to perform corresponding procedures in the methods in embodiments of this application. For brevity, details are not described herein again.

An embodiment of this application further provides a computer program.

In some embodiments, when the computer program runs on a computer, the computer is enabled to perform corresponding procedures in the methods in embodiments of this application. For brevity, details are not described herein again.

An embodiment of this application further provides a vehicle.

In some embodiments, the intelligent vehicle includes a control apparatus of the vehicle in this embodiment of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A vehicle control method based on gesture recognition, wherein the method comprises:
obtaining an in-cockpit image of a vehicle and user in-position information, wherein the user in-position information indicates positions of M users in the vehicle that are presented in the in-cockpit image;
constructing a user grid based on the in-cockpit image and the user in-position information, wherein the user grid comprises depth data of the M users;
for each of N target users performing a gesture operation, recognizing a gesture operation intention of the target user based on the user grid, wherein the M users comprise the N target users; and
separately controlling the vehicle based on gesture operation intentions of the N target users, wherein
both M and N are positive integers, and M is greater than or equal to N.

2. The method according to claim 1, wherein the constructing a user grid based on the in-cockpit image and the user in-position information comprises:
recognizing the in-cockpit image to obtain feature data of body parts of the M users, wherein the feature data comprises region data and key point data, the region data represents a region of the body parts in the in-cockpit image, and the key point data represents poses of the body parts; and
constructing the user grid based on the feature data and the user in-position information.

3. The method according to claim 1 or 2, wherein the constructing a user grid based on the in-cockpit image and the user in-position information comprises:
constructing the user grid based on the in-cockpit image, the user in-position information, and a cockpit physical parameter, wherein the cockpit physical parameter indicates a position of an in-cockpit object of the vehicle in a cockpit coordinate system.

4. The method according to any one of claims 1 to 3, wherein the separately controlling the vehicle based on gesture operation intentions of the N target users comprises:
for each of the N target users, determining, based on the user grid, whether the target user has control permission corresponding to the gesture operation intention; and
when the target user has the control permission corresponding to the gesture operation intention, controlling the vehicle based on the gesture operation intention of the target user.

5. The method according to claim 4, wherein the determining, based on the user grid, whether the target user has control permission corresponding to the gesture operation intention comprises:
determining a position of the target user in the cockpit coordinate system based on the user grid; and
determining, based on the position of the target user in the cockpit coordinate system, whether the target user has the control permission corresponding to the gesture operation intention.

6. The method according to claim 4, wherein the determining, based on the user grid, whether the target user has control permission corresponding to the gesture operation intention comprises:
determining, based on facial data of the target user in the user grid, whether the target user has the control permission corresponding to the gesture operation intention.

7. The method according to any one of claims 1 to 6, wherein the separately controlling the vehicle based on gesture operation intentions of the N target users comprises:
for each of the N target users, determining, based on key point data of the target user in the user grid, a first operation region in which a gesture key point of the target user is located;
determining, based on the first operation region, a first operation object corresponding to a first gesture operation intention; and
controlling the first operation object in the vehicle based on the first gesture operation intention of the target user.

8. The method according to claim 7, wherein the determining, based on key point data of the target user in the user grid, a first operation region in which a gesture key point of the target user is located comprises:
determining, based on the key point data of the target user and the cockpit physical parameter in the user grid, the first operation region in which the gesture key point of the target user is located.

9. The method according to claim 7 or 8, further comprising:
determining, based on the key point data of the target user in the user grid, that the gesture key point of the target user is switched from the first operation region to a second operation region;
determining, based on the second operation region, a second operation object corresponding to a second gesture operation intention; and
controlling the second operation object in the vehicle based on the second gesture operation intention of the target user.

10. The method according to any one of claims 1 to 9, further comprising:
collecting the user in-position information by using a gravity sensor and/or a radar sensor.

11. The method according to claim 3 or 8, further comprising:
collecting the cockpit physical parameter by using a radar sensor.

12. A control apparatus, comprising a module configured to perform the method according to any one of claims 1 to 11.

13. A chip, comprising a processor configured to invoke and run computer instructions from a memory, to enable a device in which the chip is installed to perform the method according to any one of claims 1 to 11.

14. An electronic device, comprising a processor and a memory, wherein the memory is configured to store a computer program, and the processor is configured to invoke and run the computer program stored in the memory, to perform the method according to any one of claims 1 to 11.

15. A computer program product, comprising computer program instructions, wherein the computer program instructions enable a computer to perform the method according to any one of claims 1 to 11.

16. A computer-readable storage medium, configured to store computer program instructions, wherein the computer program enables a computer to perform the method according to any one of claims 1 to 11.

17. A vehicle, comprising a control apparatus, wherein the control apparatus is configured to perform the method according to any one of claims 1 to 11.
